# EUROPEAN PATENT APPLICATION

(11) **EP 2 689 811 A1**
(43) Date of publication of application: **29.01.2014**
(21) Application number: 12178037.3
(22) Date of filing: 26.07.2012
(51) Int. Cl.: A63B 22/20, A63B 21/072, A63B 23/035, B60B 19/00

(54) **Exercise device**

(71) Applicant: Prest, Simon, London SW6 7UH (GB)
(72) Inventor: Prest, Simon, London SW6 7UH (GB)
(74) Representative: Bridge-Butler, Jeremy

(57) **Abstract**

An exercise device comprising a moveable frame, a control grip and wheel means, in which the control grip is carried on the frame, in which the frame is mounted for movement on the wheel means, and in which the wheel means is moveable along a first line of direction and along at least one further line of direction.

## Description

This invention relates to an exercise device, for use particularly, but not exclusively to perform press-ups and other similar exercises.

Bodyweight exercises like press-ups, squats, sit ups and so on utilise the user's own weight as resistance. Traditionally such exercises involve movement against a static surface, for example the floor in a press-up. This provides stability and allows particular muscle groups to be exercised in relative safety. However, it also limits the potential effectiveness of the exercise.

It is now known that if a degree of instability is introduced to such bodyweight exercises, then further muscles are exercised in a beneficial way as the subject attempts to maintain their stability. In particular the so-called "core" muscles of the torso and back, such as the transverse abdominals and the multifidi, are used by the subject to maintain their balance and keep good body form as they try to control the instability through each repetition of the exercise.

For example, it is known to provide press-up handles which comprise a freedom of movement of some kind. In one example the handles can rotate on an axis normal to their longitudinal length. This allows a users to rotationally adjust their hand position through a repetition of an exercise, which movement is inherently unstable and therefore beneficial. In other examples flat platforms are provided with castor wheels so they can move in any direction, and can be used in a multitude of different exercise and stretches involving the hands or feet.

However, these devices are fairly limited in their application because they can only be used for particular exercises, and because they only provide one type of instability. The present invention is intended to overcome some of these problems and to provide a novel approach.

Therefore, according to a first aspect of the present invention an exercise device comprises a moveable frame, a control grip and wheel means, in which the control grip is carried on the frame, in which the frame is mounted for movement on the wheel means, and in which the wheel means is moveable along a first line of direction and along at least one further line of direction.

Thus, the present invention provides a device with a grip to provide good purchase, for example when the device is used for press-ups, and which provides instability in at least two directions. This latter feature creates a particularly beneficial compound increase in instability over prior art examples, and the user has to use their core muscles to compensate for a variety of different movements and combination of movements made by the device in use.

Wheel means which are moveable along a plurality of different lines of direction could comprise castor wheels or ball wheels. However, castor wheels do not provide smooth changes of direction, and in particular they can provide sudden movements as the wheel rotates on a radial axis thereof, and then begins to roll on a main axis thereof. Castor wheels also require a supporting structure which adds complexity and cost. Ball wheels provide smooth changes of direction, but they also require a robust supporting structure.

Therefore, in a preferred embodiment of the invention the wheel means can comprise two wheel members arranged parallel with one another and spaced apart on a common first axis of rotation thereof (being the rolling axis), and each wheel member can comprise a rim and a plurality of roller members mounted along the rim with axes of rotation thereof normal to the first axis of rotation of the wheel member.

Wheels of this kind are known from robotics and other similar technical fields, and are referred to as omni wheels or poly wheels. A typical example is manufactured by the company Andy Mark (RTM). Such wheels have a rolling axis through which they usually provide propulsion, but can also be rolled sideways by virtue of their rim mounted rollers. In robotic vehicles this feature allows orthogonally mounted sets of omni wheels to provide propulsion in any direction.

With the configuration of the present invention, with two such omni wheels arranged parallel and spaced apart, the frame can move in a multitude of different ways and provide an advantageous level of unpredictable instability to the exercise device. Firstly, if the wheel members both roll on their rolling axes (the first axis of rotation) in the same direction then the device moves in a straight line, along the above referred to first line of direction. Secondly, if the wheel members both roll sideways on their lowermost rim mounted roller, then the device moves in a straight line normal to the first line of direction. Thirdly, with the two wheel members spaced apart, if one rolls on its rolling axis in one direction, and the other rolls on its rolling axis in the opposite direction, then the device will rotate on an upright axis equidistant between the wheel members and normal to the rolling axis of the wheel members. Finally, any one of these movements can occur simultaneously with any other, so the control grip can move in straight or curved lines in any direction, while also rotating on its own axis.

The frame can be any structure which can carry the control grip and be mounted on wheels, for example a box-frame or the like with the control grip carried at the top thereof, and the wheel members at the bottom thereof. However, in a preferred construction the frame can comprise a bar and the two wheel members can be mounted at opposite first and second ends of the bar, with the bar being rotationally fixed to the wheel members.

With this construction the exercise device has a dumbbell shape familiar to those who use free weights, which may be convenient for storage, transportation and so on. However, it is not intended to use the exercise device in the manner of a dumbbell, as it would not be of sufficient weight to be of any practical use.

The control grip can comprise a sleeve mounted over the bar and between the two wheel members, which sleeve is freely rotatable in relation to the bar. This arrangement introduces yet further instability into the device, because it allows for the wheel members to roll freely on their rolling axes while the device is being held in use.

One or more roller bearings can be provided between the sleeve and the bar. This configuration provides a smooth rotational movement, and ensures that the sleeve is provided with sufficient support.

In a preferred embodiment of the invention the wheel means can comprise four wheel members like those described above, which four wheel members can be formed into two parallel pairs, which pairs can be arranged parallel with one another and spaced apart on the common first axis of rotation thereof. In other words, each end of the exercise device comprises two omni wheels. This structure provides greater strength and rigidity to the exercise device, allowing it to be safely used by anyone.

The exercise device can be used to perform many difference exercises or stretches. In the first instance the control grip can be gripped by a user's hand or hands, and repetitious exercises like press-ups performed. If one exercise device is used the user can place both hands on the control grip, place the device on the ground, and perform movements utilising the user's own weight as resistance. If two exercise devices are used, the user can grip one in each hand, place them on the ground, and then perform press-up type exercises. All kinds of variations of this theme are possible.

However, in a further enhancement of the invention, it can be provided with additional features to allow for it to be affixed to a user's feet, so further exercise moves can be performed. Therefore, in one version of the invention, the exercise device can further comprise a foot plate removably mounted to the control grip.

With such a foot plate a user can affix the exercise device to their feet, place it on the ground, and perform leg movements utilising the user's own weight as resistance. Such movements could be stride based, split based or be based on other types of single leg or both legs motions.

The foot plate can comprise a support platform with a C-clip disposed on an underside thereof and adapted to removably rest on the control grip. Here, with the exercise device placed on the ground the support platform can simply sit on top of the control grip, and gravity or the user's weight is used to keep the components in contact with one another.

In one version a toe clip can be provided on a top side of the support platform, the toe clip facing in an opposite direction to the C-clip. Alternatively, a heel support can be provided on a top side of the support platform, the heel support facing in an opposite direction to the C-clip. These two different arrangements provide greater flexibility and allow the user to perform even more possible exercises. Two of one kind of foot plate can be used simultaneously, or different kinds can be used on each of the user's feet.

Given the above variations it will be appreciated that the invention can also be defined in terms of a kit of parts, which could include one or more foot plates as described above.

Therefore, according to a second aspect of the present invention, a kit of parts comprises one or more exercise devices, each comprising a moveable frame, a control grip and wheel means, in which the control grip is carried on the frame, in which the frame is mounted for movement on the wheel means, and in which the wheel means is moveable along a first line of direction and along at least one further line of direction, and one or more foot plates comprising a support platform with a C-clip disposed on an underside thereof and adapted to removably rest on the control grip.

The invention can be performed various ways, but one embodiment will now be described by way of example, and with reference to the accompanying drawings, in which:
Figure 1 is an end view of an exercise device according to the present invention;
Figure 2 is a front view of the exercise device as shown in Figure 1;
Figure 3 is an exploded perspective view of some parts of the exercise device as shown in Figure 1;
Figure 4 is an exploded perspective view of a first foot plate for use with the exercise device as shown in Figure 1; and
Figure 5 is an exploded perspective view of a second foot plate for use with the exercise device as shown in Figure 1.

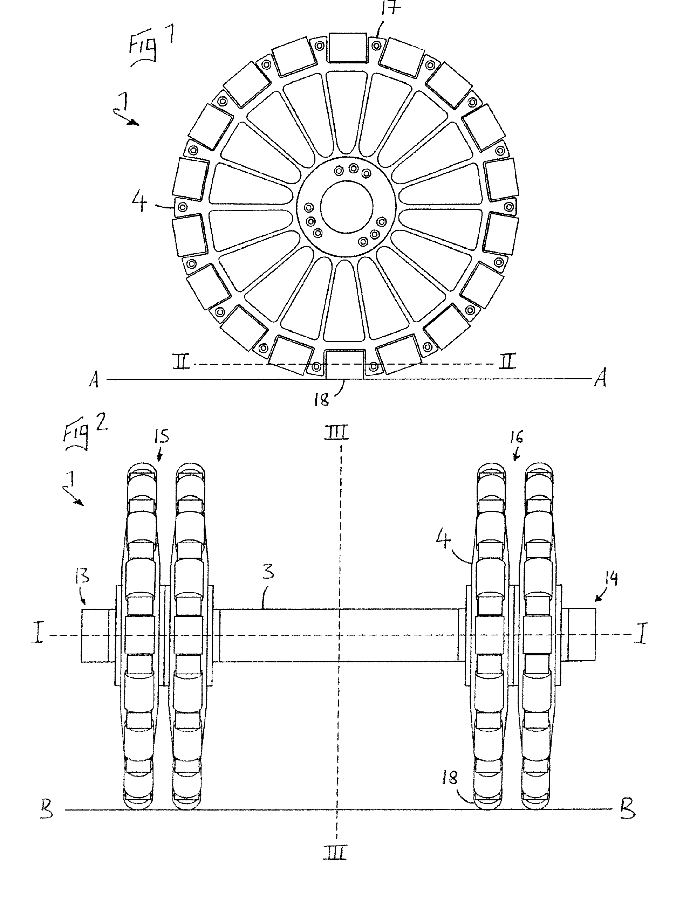

As shown in Figures 1 to 3 an exercise device 1 comprises a moveable frame, in the form of bar 2, a control grip 3 and wheel means, in the form of four omni wheels 4. The control grip 3 is carried on the frame 2, and as explained further below the frame 2 is mounted for movement on the wheel means 4, which are moveable along a first line of direction A-A and along at least one further line of direction, for example B-B.

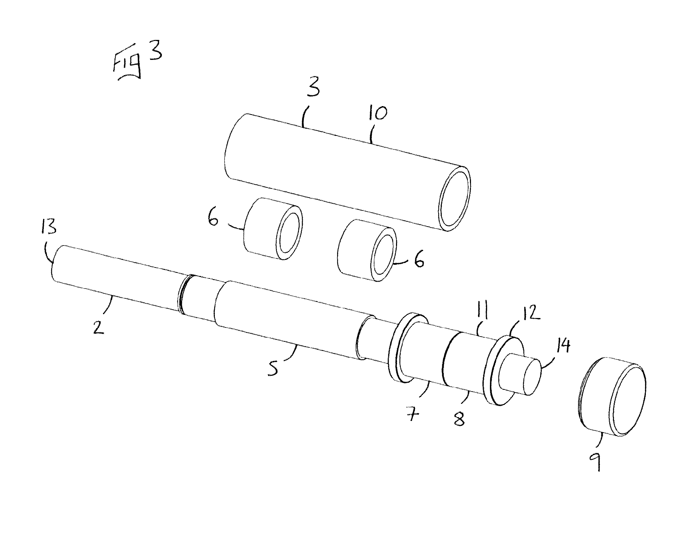

As shown in Figure 3, the frame comprises a steel bar 2, with a spacer sleeve 5 mounted centrally thereon. On either side of the spacer sleeve 5 are mounted roller bearings 6 (shown in an exploded position). Outside the roller bearings 6 are provided support brackets 7 and 8 (only one pair of which are shown), and outside the support brackets 7 and 8 are provided end caps 9 (only one of which is shown).

The control grip 3 comprises sleeve 10 (shown in an exploded position), which is carried on the roller bearings 6, so as to provide free rotational movement between the sleeve 10 and the bar 2. The sleeve 10 is made from a resilient non-slip material suitable for use in exercising. The support brackets 7 and 8 are identical and comprise sleeves 11 with end flanges 12, and the brackets 7 and 8 are arranged in an opposed configuration. The brackets 7 and 8 provide support for the omni wheels 4, with the flanges 12 thereof preventing axial movement thereof on the bar 2. The end caps 9 affix to the opposite first 13 and second 14 ends of the bar 2, and hold the support brackets 7 and 8, the roller bearings 6 and the spacer sleeve 5 in place. The end caps 9 are removable to allow the above components to be dismantled.

Referring to Figure 2, this shows how the wheel members 4 are mounted at the opposite first 13 and second 14 ends of the bar 2. The wheel members 4 are formed into two parallel pairs 15 and 16, which pairs 15 and 16 are arranged parallel with one another and spaced apart on a common first axis of rotation thereof 1-1 (being the rolling axis of the wheel members 4). The wheel members 4 are rotationally fixed to the support brackets 7 and 8, which are themselves rotationally fixed to the bar 2.

Each wheel member 4 comprises a rim 17 and eighteen roller members 18 mounted equidistant along the rim 17, with axes of rotation II-II thereof normal to the first axis of rotation I-I of the wheel member 4.

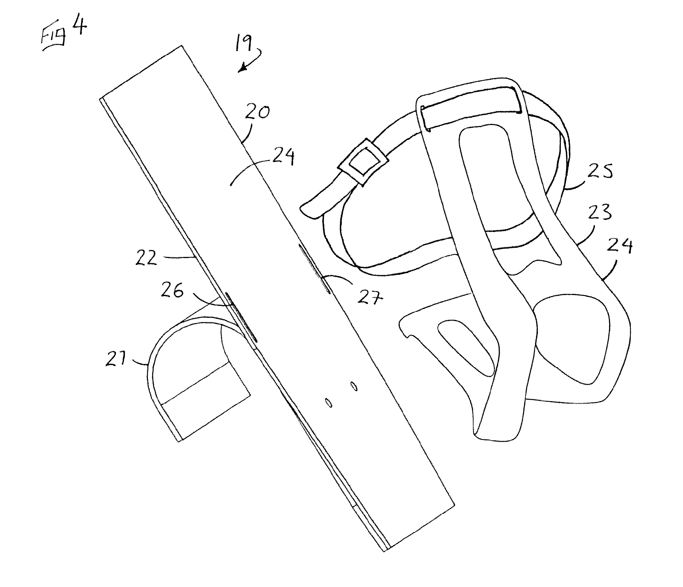

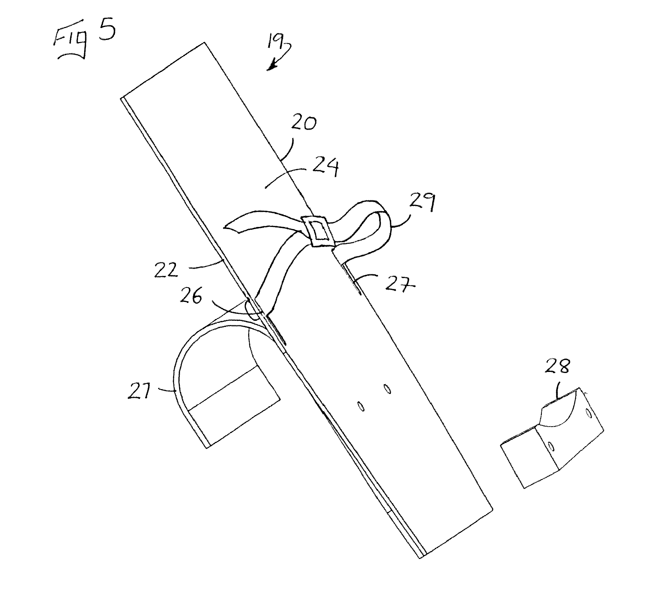

Referring to Figures 4 and 5, these show foot plates 19 which can be removably mounted to the control grip 3. These comprise a support platform 20 with a C-clip 21 disposed on an underside 22 thereof, and adapted to removably rest on the control grip 3. In the version shown in Figure 4 a toe clip 23 (shown in an exploded position) is provided on a top side 24 of the support platform 20, the toe clip 23 facing in an opposite direction to the C-clip 21. The toe clip 23 is like that found on a bicycle pedal, and comprises a shoe gripping frame 24, with a flexible tightening strap 25. The strap 25 is threaded through apertures 26 and 27 on the support platform 20, so when it is shortened a user's shoe is secured in the frame 24. In the version shown in Figure 5 a heel pad 28 (shown in an exploded position) is provided on the top side 24, facing in an opposite direction to the C-clip 21. A flexible tightening strap 29 is provided on the support platform 20, threaded through apertures 26 and 27, so a user's shoe or foot can be secured in place on the support platform 20.

In use the exercise device 1 operates as follows. In the first instance the control grip 3 can be gripped by a user's hand or hands, and repetitious exercises like press-ups performed. If one exercise device 1 is used the user can place both hands on the control grip 3, place the device on the ground, and perform movements utilising the user's own weight as resistance, for example keeping the feet on the ground and hinging the body at the shoulders or hips. If two exercise devices 1 are used, the user can grip one in each hand, place them on the ground, and then perform press-up type exercises. All kinds of variations of this theme are possible.

With the configuration of the omni wheels 4 arranged in two spaced apart parallel pairs 15 and 16, the frame 2 can move in a multitude of different ways when performing exercise like those described above, and thereby provide an advantageous level of unpredictable instability. Firstly, if the pairs of wheel members 15 and 16 both roll on their rolling axes I-I in the same direction along line A-A, then the device 1 moves in a straight line. Secondly, if the wheel member 4 all roll sideways on their lowermost rim mounted roller 18, then the device 1 moves along line B-B, which is normal to line A-A. Thirdly, with the two pairs 15 and 16 of wheel members 4 spaced apart, if one pair 15 rolls on its rolling axis I-I in one direction, and the other pair 16 rolls on its rolling axis I-I in the opposite direction, then the device 1 will rotate on a upright axis III-III equidistant between the pairs 15 and 16 of wheel members 4. Finally, any one of these movements can occur simultaneously with any other, so the control grip 3 can move in straight or curved lines in any direction as a factor of lines A-A and B-B, while also rotating on its own axis III-III.

As the control grip 3 is freely rotatable in relation to the bar 2, the user has limited control over the position and movement of the device 1, which introduces further beneficial instability. At the same time, this arrangement also allows the user to maintain a substantially consistent grip position as the device 1 moves around, which improves usability.

All this unpredictable instability means that when a user performs press-up type exercise or similar, they are forced to not only use the muscles they would normally use to perform such an exercise, but also the core muscles of the torso and back as they try to maintain control of their stance and position.

If desired a foot plate 19 can be applied to the control grip 3 as described above. A user can place their foot on the foot plate 19 either toe down or toe up, according to which arrangement of foot plate 19 is used, and then secure it in place using the strap 25 or 29. Two foot plates 19 of the same kind can be used with two devices 1, or two different foot plates 19 can be used with two devices 1, according to the exercise to be performed. Such movements could be stride based, split based or be based on other types of single leg or both legs motions.

As referred to above, the invention also includes a kit of parts. The components shown in Figures 1 to 5 provide clear support for such a kit of parts.

The invention can be altered without departing from the scope of claim 1. For example, in alternative embodiments (not shown), the wheel means comprise castor wheels or ball wheels.

In another alternative embodiment (not shown) the frame comprises a box-frame with the control grip carried at the top thereof, and the wheel members at the bottom thereof.

In a final alternative embodiment the device can comprise just one omni wheel type wheel member at each end of the frame, rather than a pair.

Therefore, the invention provides an exercise device which can be used to facilitate a multitude of different bodyweight exercises, all of which benefit from enforced use of the core muscles of the torso and back by virtue of the high degree of unstable movement inherent in the device.

## Claims

1. An exercise device comprising a moveable frame, a control grip and wheel means, in which the control grip is carried on the frame, in which the frame is mounted for movement on the wheel means, and in which the wheel means is moveable along a first line of direction and along at least one further line of direction.

2. An exercise device as claimed in claim 1 in which the wheel means comprises two wheel members arranged parallel with one another and spaced apart on a common first axis of rotation thereof, in which each wheel member comprises a rim and a plurality of roller members mounted along the rim with axes of rotation thereof normal to the first axis of rotation of the wheel member.

3. An exercise device as claimed in claim 2 in which the frame comprises a bar, in which the two wheel members are mounted at opposite first and second ends of the bar, and in which the bar is rotationally fixed to the wheel members.

4. An exercise device as claimed in claim 3 in which the control grip comprises a sleeve mounted over the bar and between the two wheel members, and in which the sleeve is freely rotatable in relation to the bar.

5. An exercise device as claimed in claim 4 in which one or more roller bearings are provided between the sleeve and the bar.

6. An exercise device as claimed in any of claims 2 to 5 in which the wheel means comprises four wheel members as claimed in claim 2, which four wheel members are formed into two parallel pairs, which pairs are arranged parallel with one another and spaced apart on the common first axis of rotation thereof.

7. An exercise device as claimed in any of the preceding claims in which the exercise device further comprises a foot plate removably mounted to the control grip.

8. An exercise device as claimed in claim 7 in which the foot plate comprises a support platform with a C-clip disposed on an underside thereof and adapted to removably rest on the control grip.

9. An exercise device as claimed in claim 8 in which a toe clip is provided on a top side of the support platform, the toe clip facing in an opposite direction to the C-clip.

10. An exercise device as claimed in claim 8 in which a heel support is provided on a top side of the support platform, the heel support facing in an opposite direction to the C-clip.

11. An exercise device substantially as described herein and as shown in the accompanying drawings.

12. A kit of parts comprising one or more exercise devices, each comprising a moveable frame, a control grip and wheel means, in which the control grip is carried on the frame, in which the frame is mounted for movement on the wheel means, and in which the wheel means is moveable along a first line of direction and along at least one further line of direction, and one or more foot plates comprising a support platform with a C-clip disposed on an underside thereof and adapted to removably rest on the control grip.

13. A kit of parts substantially as described herein and as shown in the accompanying drawings.
